# Europäisches Patentamt
# European Patent Office
# Office européen des brevets

(19)

(11) Publication number: **0 040 627**
**B1**

(12) **EUROPEAN PATENT SPECIFICATION**

(45) Date of publication of patent specification: **25.07.84**

(21) Application number: **81900005.0**

(22) Date of filing: **19.11.80**

(86) International application number:
**PCT/DK80/00072**

(87) International publication number:
**WO 81/01615 11.06.81 Gazette 81/14**

(51) Int. Cl.³: **G 01 N 25/48,**
**G 01 N 31/06**

(54) **A METHOD AND APPARATUS FOR DETERMINING THE CONCENTRATION OF AN ABSORBABLE COMPONENT IN A GAS STREAM.**

(30) Priority: **30.11.79 DK 5100/79**

(43) Date of publication of application:
**02.12.81 Bulletin 81/48**

(45) Publication of the grant of the patent:
**25.07.84 Bulletin 84/30**

(84) Designated Contracting States:
**CH DE FR GB LI NL SE**

(56) References cited:
**CH - A - 506 790**
**DE - A - 1 598 772**
**DE - A - 1 773 968**
**DE - A - 2 165 759**
**DE - B - 2 225 889**
**DE - C - 252 538**
**DE - C - 823 807**
**FR - A - 2 406 200**
**GB - A - 1 431 095**
**US - A - 1 475 000**
**US - A - 4 042 328**

(73) Proprietor: **SORENSEN, Ansgar Christian Hoffmann**
**Anemonevej 4**
**DK-3450 Allerod (DK)**

(72) Inventor: **SORENSEN, Ansgar Christian Hoffmann**
**Anemonevej 4**
**DK-3450 Allerod (DK)**

(74) Representative: **Zimmermann, Heinz, Dipl.-Ing.**
**Patentanwälte Leinweber & Zimmermann**
**Rosenthal 7/II Aufg.**
**D-8000 München 2 (DE)**

Courier Press, Leamington Spa, England.

## Description

This invention relates to a method for determining the concentration of an absorbable component in a gas stream by subjecting said gas stream to absorption in a stream of a liquid absorbent, heating or cooling the stream of absorbent before bringing it into contact with the gas stream to the temperature attained by the stream of absorbent as a consequence of heat developed by the absorption process, measuring said temperature attained by the stream of absorbent, and measuring the temperature of the gas stream before the point at which said gas stream is brought into contact with the stream of absorbent.

A method that may be used for the determination of the concentration of an absorbable component in a gas stream in the manner above described is known from US—A— 4,042,328, in which case the gas stream will be the "sample" and the stream of liquid absorbent will be the "reagent". According to the US patent the sample and the reagent are mixed with each other and remain mixed until the reaction has been completed. In the circumstances here to be considered this will mean that the gas stream and the absorbent stream remain mixed until a condition of static equilibrium has been achieved where the absorption process has come to an end. Thus, this method is on principle a calorimetric method, and though the pre-heating or pre-cooling of the reagent is intended to eliminate the influence of the flow rates of the sample and reagent on the measurement, this elimination will not be complete, and in evaluating the measuring result, a correction must also be made for the degree of completeness of the reaction. During the whole progress of the reaction, the mixture must necessarily be in contact with walls, which must be insulated and besides represent a thermal capacity, which will contribute to increase the time constant for the measurement.

It is the object of the invention to provide a method, by which an extremely accurate measurement can be obtained which, within a wide range, is so to speak completely independent on the rates of flow of the gas stream and the stream of absorbent, and which avoids all problems inherent in the mixing of the two streams and carrying the absorption forward to a condition of static equilibrium.

With this object in view, the method according to the invention comprises the steps of

continuously passing a stream of said liquid absorbent upwardly through a vertical tube having an open upper end, thereby to form at said open upper end a free surface area of absorbent, which is constantly replenished by fresh absorbent arriving through said tube,

causing the gas stream to flow past said free surface area of the absorbent in surface contact therewith,

measuring said temperature attained by the absorbent at a location adjacent said free surface area, but completely covered by absorbent,

measuring said temperature of the gas stream before the point at which said gas stream is brought into contact with the stream of absorbent as said gas stream approaches said free surface area at a location at a sufficient distance from said free surface area to be thermally unaffected by the temperature of the absorbent in that area,

effecting the heating or cooling of the stream of absorbent by bringing the absorbent arriving at said free surface area from said vertical tube to a temperature practically equal to that at which the heat developed by absorption at said free surface area is equal to the heat carried away from said free surface area by convection by the stream of gas flowing past said free surface area, said temperature being referred to in the following as the dynamic equilibrium temperature, and

so selecting the parameters of the process that
a) the resistance to the diffusion of matter involved in the absorption process is negligible in the liquid phase in relation to that in the gaseous phase,
b) the equilibrium concentration of the absorbable component in the gas immediately adjacent said free surface area of the absorbent is negligible in relation to the concentration of said absorbable component in the gas stream.

The method according to the invention depends upon the fact that a condition of dynamic equilibrium is created when surface contact takes place between the gas stream and a stream of absorbent, since the stream of absorbent will absorb the component A from the gas stream when contact takes place between the two at the free surface area of absorbent formed at the upper end of the tube. During the absorption process, which may be purely physical in nature or may be accompanied by one or more chemical reactions in the absorbent, heat is released, hereinafter referred to as absorption heat, causing the temperature of the stream of absorbent to increase in the free surface area. In this way the absorbent will reach a higher temperature than the adjoining gas stream, with the result that heat will be transferred by convection from the stream of absorbent to the gas stream, although a proportion of the heat released during the absorption process will, unless special measures are taken to prevent this, be carried away with the stream of absorbent material in the form of sensible heat.

The temperature of the stream of absorbent in the free surface area will increase until the point is reached at which the quantity of heat which is released per unit of time during the absorption process is identical to the quantity of heat which is removed per unit of time. The temperature which the absorbent adopts in this way is that defined above as the "dynamic equilibrium temperature". By heating the absorbent to that temperature before it is brought into contact with the gas stream, the dynamic equilibrium temperature will not be dependent upon the size of the stream of absorbent, since the entire quantity of heat released during the absorption process will then be transferred to the adjoining gas stream, ignoring the possibility of a small loss by radiation from the surface of the absorbent to the surrounding walls. Since the concentration of the absorbable component A at the free surface area of the absorbent is insignificantly small in relation to the concentration of A in the undisturbed gas stream, it may be stated with a high degree of approximation that the rate at which A is absorbed, and thus the rate at which heat is generated, will be proportional to the concentration of A in the gas stream.

The difference in temperature which occurs between the surface of the absorbent and the gas stream, and which is the reason why the absorption heat which is released may be transferred to the gas stream, is also proportional to the quantity of heat released per unit of time, with the result that proportionality exists between the concentration of A in the gas stream and the overtemperature of the absorbent in relation to the temperature of the surrounding undisturbed gas stream. Thus the concentration of A in the gas stream may be determined by measuring that overtemperature. Both the transfer of A from the gas stream to the surface of the absorbent and the transfer in the opposite direction of heat from the free surface of the absorbent to the gas stream take place by convection. Any changes in the speed or direction of the gas stream past the free surface of the absorbent will therefore affect both the absorption process and the transfer of heat to the same degree and will not accordingly change the relationship between the overtemperature of the free surface of the absorbent and the concentration of the component A in the gas stream.

The rate of absorption will rise with increasing concentration of A in the gas stream, just as the speed and direction of the gas stream in relation to the free surface of the absorbent will have an effect on the rate at which absorption takes place.

The result of absorption is an accumulation of A at the free surface of the absorbent, and if no provision is made for the adequate replacement of the surface of the absorbent at the point of measurement by the supply of fresh, undiluted absorbent, the concentration of A in the gaseous phase directly at the surface will increase and will gradually reach a size which may not be ignored by comparison with the concentration of A in the undisturbed gas stream. When this occurs, the rate of absorption will be highly dependent upon the conditions of concentration and the temperature at the surface of the absorbent, thus invalidating the basic principle of the method of measurement. The requirement for the surface to be replaced grows in line with the increase in the concentration of A in the gas stream and sets an upper limit to the size of the concentrations which may be determined directly by the use of this method of measurement. In addition to depending on the concentration of A in the gas stream, this limit will also depend on the geometrical shape of the measuring instrument used for carrying out the method and on the temperature, speed and direction of the gas stream.

The quantity of heat released by the absorption of a given quantity of the component A will normally depend on both the conditions of concentration within the absorbent and its temperature. The dependence of the absorption heat on the concentration will normally require the surface of the absorbent at the point of measurement to have a constant level of concentration, whereas the effect of the temperature on the absorption heat will be so low in the majority of cases that only rarely will it be necessary to take it into consideration, which may be done, furthermore, since the absorption temperature has a known value, as it is identical to the dynamic equilibrium temperature.

The gas speed past the measuring instrument is of significance to the rate at which the dynamic equilibrium temperature of the stream of absorbent will be reached, since any increase in the gas speed will cause the point of equilibrium to be reached more quickly due to the higher heat and material transfer coefficients involved in the exchange of heat and material between the gas stream and the stream of absorbent. Since any increase in the gas speed will involve an increase in the rate of heat transmission by convection, but without any variation in the dynamic equilibrium temperature, the relative significance of the possible loss by radiation from the free surface of the absorbent to the surroundings will fall as the gas speed increases. For these reasons, then, a high gas speed past the measuring instrument is desirable to the extent that it may be combined with the requirement for the adequate effective replacement of the surface of the absorbent at the point of measurement.

The method described here makes possible the precise and continuous determination of the concentration of an absorbable component in a gas stream. The time constant for the measurement may be varied within wide limits by the appropriate geometrical design of, and by the selection of an appropriate gas speed past, the point of measurement.

Over a wide range, the reading will be unaffected by the temperature and pressure of the gas stream and by its speed past the point of measurement, just as the reading will be insensitive to variations in the size and temperature of the stream of absorbent.

The method described here also permits the determination of the concentration to be unaffected by the presence of inert dust in the gas stream, since the contact surface between the absorbent and the gas stream is continually being replaced at the point of measurement. Nevertheless, the measurement will be distorted by the presence of any dust which is capable of reacting with the absorbent accompanied by heat content change.

The method described here is an absolute method for the determination of concentration and as such requires no prior calibration. The difference in temperature measured by this method between the free surface of the absorbent and the gas stream provides a measure of the mole fraction or of the volume concentration of the absorbable component, since the recorded increase in temperature is very near proportional to that concentration.

In the basic mode of carrying out the method according to the invention, the gas stream in which the concentration of A is to be determined is brought into contact with the surface of the absorbent without undergoing any prior treatment.

However, so as to be able to determine the concentration of A in gas streams in which the content of A is so high that if the gas stream were applied directly to the free surface area of the absorbent, condition b) supra would no longer be fulfilled, it may be expedient before determining the concentration by means of the method in accordance with the present invention to dilute the gas stream with a stream of A-free gas in a known proportion. This stream of gas may either be introduced from a source outside the measuring apparatus or may be produced by purifying the gas stream which has already passed the point of measurement of its content of the component A by means of a suitable absorption or adsorption medium. The gas stream which has thus been purified is then divided into two streams in a predetermined proportion, whereupon one of the streams is mixed with the original gas stream before this is caused to flow past the free surface area of the absorbent. The other stream is discarded.

When diluting the gas stream as described, it will be found to be expedient if dilution takes place close to the point at which the undiluted flow is removed, since the dew point of the gas flow is lowered by the mixing process, thus reducing the risk of condensation in the supply pipework to the central section of the measuring apparatus.

It may also be found to be expedient to equip the measuring apparatus with a means of regenerating the absorption or adsorption medium. Where concentrated sulphuric acid is used as the absorbent when determining the water content of air, the measuring apparatus may then be equipped with a distillation column for the purpose of re-concentrating the used sulphuric acid.

When measuring gas streams at high temperatures, it may be found to be expedient to cool the flow before it is applied to the free surface area of the absorbent.

When measuring the concentration of A in gas streams with a very low A-content, it may also be found to be expedient to bring the gas stream and the stream of absorbent into concurrent thermal contact with each other, so that they will be at approximately the same temperature, before the steps of method are commenced.

By selecting an appropriate absorbent, the method described here may be used for determining the concentration of a large number of components, including technically important substances such as $H_2O$, $CO$, $CO_2$, $SO_2$, $O_2$ and $NO_2$. The following is a list of examples of different types of absorbent:

a) Acids, such as sulphuric acid and phosphoric acid;
b) Bases, such as sodium hydroxide, sodium carbonate, amines and ammonia solutions;
c) Oxidizing agents, such as potassium permanganate, potassium dichromate and sodium peroxide;
d) Reducing agents, such as sodium hyposulphite and pyrogallol;
e) Complexing agents, such as ammoniacal solutions of copper salts.

The absorbent may be in the form of either a true liquid or a fluid suspension and may contain dissolved or solid catalysts.

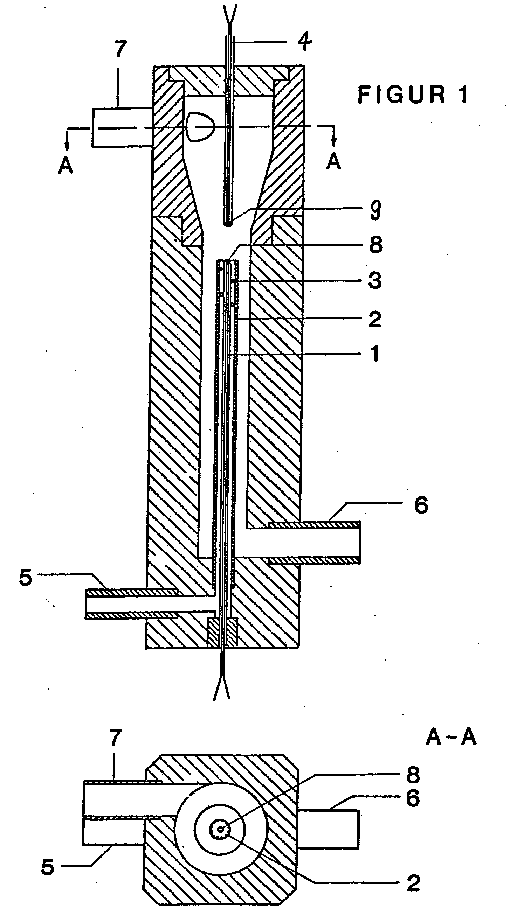

For example, the water vapour concentration in an air mixture may be determined by the use of concentrated sulphuric acid as the absorbent, since the partial equilibrium pressure of water vapour over 98% sulphuric acid is less than 0.1 mm of mercury at 200°C. A series of tests were conducted in a measuring cell of the type illustrated in Fig. 1. The stream of absorbent was regulated between 10 ml/h and 30 ml/h, and the air flow was regulated between 250 l/h and 1000 l/h. The temperature of the air supply varied between 20°C and 60°C. At water vapour concentrations of up to 3.5 mol %, no dependency on the test parameters which were applied was observed, since a linear relationship was found to exist irrespective of the test conditions between the water vapour concentration in the air and the overtemperature of the stream of sulphuric acid in relation to the surrounding air stream. The recorded temperature rise amounted to about 25°C per mol% of water vapour in the air.

The invention also relates to an apparatus for determining the concentration of an absorbable component in a gas stream. The apparatus, which is specifically designed for carrying out the method according to the invention, comprises a vertical tube having a heat-conducting wall and having an opening at its top, means for passing a stream of liquid absorbent upwards through said tube so as to flow out of said opening and thereby to form above said opening a free surface area from which the absorbant overflows downwards along the outside of the tube, means for passing the gas stream past the free surface area of the absorbent above the opening of the tube, a first temperature sensor fitted directly inside or adjacent said opening, the stream of absorbent flowing out through said opening completely surrounding said first temperature sensor, and a second temperature sensor being fitted in the path of the gas stream at a sufficient distance from said free surface area to be thermally unaffected by the temperature of the absorbent in that area.

Fig. 1 shows a through-flow measuring cell in accordance with the present invention. The apparatus consists of a housing with a central bore, through which the gas stream which is to be tested is passed in a downward direction, with the gas entering through a pipe stub 7 and leaving through a second stub 6.

The stream of absorbent enters through a stub 5 and moves upwards through a tube 2 having a heat-conducting wall. From the top of this tube the spent absorbent moves downwards under the effect of gravity in the form of a stream along the outside of the tube in contact with the gas stream and in heat exchange relationship with the upward stream of fresh absorbent in the interior of the tube through the heat-conducting wall of the tube, whereby said stream of fresh absorbent will be heated or cooled by said stream of spent absorbent to a temperature close to the dynamic equilibrium temperature. For heating the fresh absorbent to the dynamic equilibrium temperature an external source of energy may be used instead of or supplemental to the heating by heat exchange with spent absorbent as described. In the embodiment shown here the stream of absorbent leaves through the stub 6 together with the gas stream.

At the upper end of the tube, where the fresh absorbent forms a free surface area which is exposed to the gas stream of which the concentration of the absorbable component is to be determined, is located a thermoelement 8, housed in a protective casing 1, which passes up through the tube 2 and is held concentrically inside said tube by means of a spiral 3.

Above the tube 2 and at a small distance from it is located a second thermoelement 9 of the same type as the thermoelement 8 and, like said thermoelement, housed in a protective casing 4.

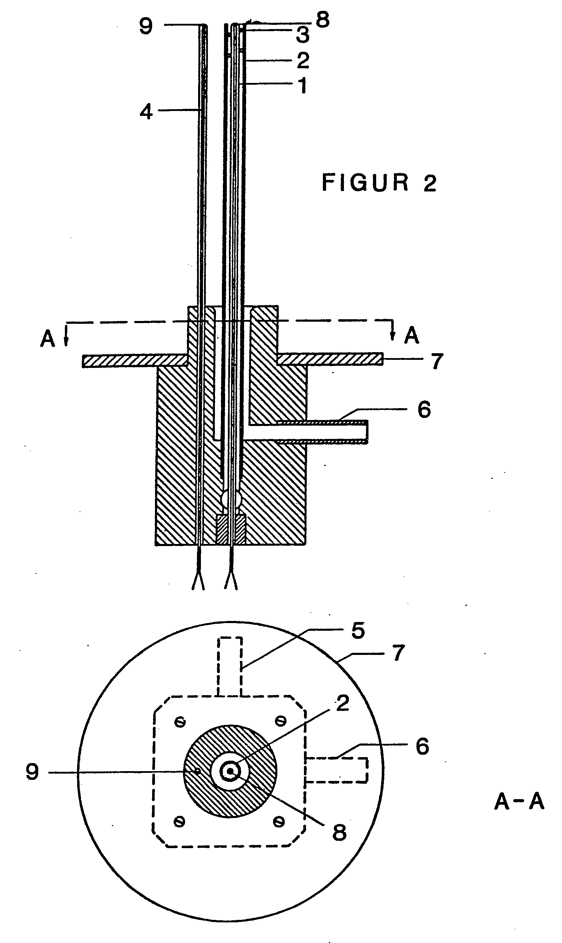

Fig. 2 shows a measuring apparatus for direct installation in a horizontal channel or similar. The apparatus consists of a solid block with bores, in which is installed a vertical open tube 2. The absorbent enters through a stub 5 and flows to the top of the tube 2, from where the absorbent materials runs down the outside of the tube and leaves through the stub 6.

At the upper mouth of the tube 2 is located a thermoelement 8 surrounded by a protective casing 1, which is held concentrically inside the tube 2 by means of a spiral 3.

A second thermoelement 9 of the same type as the thermoelement 8 is housed inside a protective casing 4. When installing the measuring apparatus, the thermoelement 9 shall be positioned in such a way that the gas flow will meet said thermoelement before the gas flow meets the tube 2.

A location flange 7 is used to secure the apparatus to the wall of the channel.

## Claims

1. A method for determining the concentration of an absorbable component in a gas stream by subjecting said gas stream to absorption in a stream of a liquid absorbent, heating or cooling the stream of absorbent before bringing it into contact with the gas stream, to the temperature attained by the stream of absorbent as a consequence of heat developed by the absorption process, measuring said temperature attained by the stream of absorbent, and measuring the temperature of the gas stream before the point at which said gas stream is brought into contact with the stream of absorbent, characterized by the steps of

continuously passing a stream of said liquid absorbent upwardly through a vertical tube having an open upper end, thereby to form at said open upper end a free surface area of absorbent, which is constantly replenished by fresh absorbent arriving through said tube,

causing the gas stream to flow past said free surface area of the absorbent in surface contact therewith,

measuring said temperature attained by the absorbent at a location adjacent said free surface area, but completely covered by absorbent,

measuring said temperature of the gas stream before the point at which said gas stream is brought into contact with the stream of absorbent as said gas stream approaches said free surface area at a location at a sufficient distance from said free surface area to be thermally unaffected by the temperature of the absorbent in that area,

effecting the heating or cooling of the stream of absorbent by bringing the absorbent arriving at said free surface area from said vertical tube to a temperature practically equal to that at which the heat developed by the absorption at said free surface area is equal to the heat carried away from said free surface area by convection by the stream of gas flowing past said free surface area, said temperature being referred to in the following as the dynamic equilibrium temperature, and

so selecting the parameters of the process that

a) the resistance to the diffusion of matter involved in the absorption process is negligible in the liquid phase in relation to that in the gaseous phase,

b) the equilibrium concentration of the absorbable component in the gas immediately adjacent said free surface area of the absorbent is negligible in relation to the concentration of said absorbable component in the gas stream.

2. A method as in claim 1, characterized in that the stream of fresh absorbent, before being fed to said free surface area, is brought into reverse-flow thermal contact with the stream of spent absorbent leaving said area and is separated from it by means of a heat-conducting wall, whereby said stream of fresh absorbent will be heated or cooled by said stream of spent absorbent to a temperature close to the dynamic equilibrium temperature.

3. A method as in claim 1 comprising the additional steps of bringing the gas stream, after it has passed the free surface area of the absorbent, into contact with an absorption or adsorption medium for the purpose of removing the absorbable component from the gas,

dividing the thus purified gas in a predetermined proportion,

mixing one of the gas streams thus created with the original gas stream before this is caused to flow past the free surface area of the absorbent at the upper end of the tube,

discarding the other one of the purified gas streams.

4. An apparatus for determining the concentration of an absorbable component in a gas stream in accordance with claims 1 or 2 comprising a vertical tube (2) having a heat-conducting wall and having an opening at its top, means for passing a stream of liquid absorbent upwards through said tube so as to flow out of said opening and thereby to form above said opening a free surface area from which the absorbent overflows downwards along the outside of the tube, means for passing the gas stream past the free surface area of the absorbent stream above the opening of the tube, a first temperature sensor (8) fitted directly inside or adjacent said opening, the stream of absorbent flowing out through said opening completely surrounding said first temperature sensor (8), and a second temperature sensor (9) being fitted in the path of the gas stream at a sufficient distance from said free surface area to be thermally unaffected by the temperature of the absorbent in that area.

**Revendications**

1. Procédé pour déterminer la concentration d'un constituant absorbable dans un courant gazeux en soumettant ledit courant gazeux à une absorption dans un courant de liquide absorbant, en chauffant ou en refroidissant le courant d'absorbant, avant de le mettre en contact avec le courant gazeux, à la température atteinte par le courant d'absorbant résultant de la chaleur développée par le processus d'absorption, en mesurant ladite température atteinte par le courant d'absorbant, et en mesurant la texpérature du courant gazeux avant le point auquel ledit courant gazeux est mis en contact avec le courant d'absorbant, caractérisé en ce qu'il comporte les phases consistant à:

— faire passer en continu un courant dudit liquide absorbant vers le haut, à travers un tube vertical qui présente une extrémité supérieure ouverte, pour former à ladite extrémité supérieure ouverte une zone de surface libre d'absorbant qui est constamment remplie par de l'absorbant neuf arrivant à travers ledit tube,

— faire passer le courant gazeux devant ladite zone de surface libre de l'absorbant en contact de surface avec celui-ci,

— mesurer ladite température atteinte par l'absorbant en un point adjacent à ladite zone de surface libre, mais totalement recouvert par l'absorbant,

— mesurer ladite température du courant de gaz avant le point auquel ledit courant de gaz est mis en contact avec le courant d'absorbant, quand ledit courant de gaz approche de ladite zone de surface libre, en un point situé à une distance suffisante de ladite zone de surface libre pour être thermiquement non affecté par la température de l'absorbant dans cette zone,

— effectuer le chauffage ou le refroidissement du courant d'absorbant en portant l'absorbant qui arrive à ladite zone de surface libre, à partir dudit tube vertical, à une température pratiquement égale à celle à laquelle la chaleur développée par l'absorption à ladite zone de surface libre est égale à la chaleur prélevée de ladite zone de surface libre par convection par le courant de gaz passant devant ladite zone de surface libre, cette température constituant la température ci-après nommée température d'équilibre dynamique, et

— en choisissant les paramètres du processus de manière que

a) la résistance à la diffusion de matière engendrée dans le processus d'absorption soit négligeable dans la phase liquide par rapport à celle de la phase gazeuse,

b) la concentration d'équilibre du constituant absorbable dans le gaz, en adjacente immédiate à ladite zone de surface libre de l'absorbant, soit négligeable par rapport à la concentration du constituant absorbable dans le courant gazeux.

2. Procédé selon la revendication 1, caractérisé en ce que le courant d'absorbant neuf, avant de passer sur ladite zone de surface libre, est mis en contact thermique à contre-courant avec le courant d'absorbant utilisé qui quitte ladite zone et est séparé de celui-ci au moyen d'une paroi conductrice de la chaleur, ledit courant d'absorbant neuf étant ainsi chauffé ou refroidi par ledit courant d'absorbant utilisé, à une température voisine de la température d'équilibre dynamique.

3. Procédé selon la revendication 1, caractérisé en ce qu'il comporte les étapes additionnelles consistant à:

— mettre le courant gazeux, après qu'il est passé devant la zone de la surface libre de l'absorbant, en contact avec un milieu d'absorption ou d'adsorption en vue d'extraire du gaz le constituant absorbable,
— diviser le gaz ainsi purifié en proportion déterminée,
— mélanger l'un de ces courants de gaz ainsi créés avec le courant gazeux original avant que celui-ci passe sur la zone de surface libre de l'absorbant à l'extrémité supérieure du tube,
— écarter l'autre courant de gaz purifié.

4. Appareil pour déterminer la concentration d'un constituant absorbable dans un courant gazeux pour la mise en oeuvre du procédé selon l'une des revendications 1 et 2, caractérisé par le fait qu'il comporte un tube vertical (2) comprenant une paroi conductrice de la chaleur et une ouverture à sa partie supérieure, des moyens pour faire passer un courant d'absorbant liquide vers le haut, dant ledit tube, pour qu'il sorte par ladite ouverture et forme, au-dessus de ladite ouverture, une zone de surface libre à partir de laquelle l'absorbant déborde et s'écoule vers le bas le long de la face extérieure du tube, des moyens pour faire passer le courant gazeux sur la zone de surface libre du courant absorbant, au-dessus de l'ouverture du tube, un premier détecteur de température (8) placé directement à l'intérieur ou au voisinage de ladite ouverture, le courant d'absorbant qui sort par ladite ouverture entourant complètement ledit premier détecteur de température (8), et un second détecteur de température (9) placé sur le trajet de gaz à une distance suffisante de ladite zone de surface libre pour être thermiquement non affecté par la température de l'absorbant dans cette zone.

**Patentansprüche**

1. Verfahren zur Ermittlung der Konzentration einer absorbierbaren Komponente in einem Gasstrom, bei dem:—der genannte Gasstrom einer Absorption in einem Strom von flüssigem Absorptionsmittel ausgesetzt wird; —der Absorptionsmittelstrom, bevor er mit dem Gasstrom in Berührung gebracht wird, auf die Temperatur, die der Absorptionsmittelstrom unter dem Einfluss der durch den Absorptionsvorgang entwickelten Wärme annimmt, geheizt oder gekühlt wird; —die genannte, vom Absorptionsmittel angenommene Temperatur gemessen wird, —und die Temperatur des Gasstroms, vor dem Punkt, wo er mit dem Absorptionsmittelstrom in Berührung gebracht wird, gemessen wird, dadurch gekennzeichnet,

dass ein Strom des genannten flüssigen Absorptionsmittels kontinuierlich aufwärts durch eine senkrechte Röhre mit offenem oberem Ende geleitet wird, so dass am genannten offenen oberen Ende end freier Oberflächenbereich von Absorptionsmittel gebildet wird, das durch frisches, durch die genannte Röhre zuströmendes Absorptionsmittel fortwährend erneuert wird,

dass der Gasstrom dazu gebracht wird, in Berührung mit dem genannten freien Oberflächenbereich an diesem vorbeizuströmen,

dass die genannte, vom Absorptionsmittel angenommene Temperatur an einer Stelle in unmittelbarer Nähe des genannten freien Oberflächenbereichs, jedoch von Absorptionsmittel vollständig gedeckt, gemessen wird,

dass die genannte Temperatur des Gasstromes vor dem Punkt, wo er mit dem Absorptionsmittelstrom in Berührung gebracht wird, indem er an den genannten freien Oberflächenbereich heranströmt, gemessen wird, u.zw. an einer Stelle in ausreichendem Abstand vom genannten freien Oberflächenbereich, um von der Temperatur des Absorptionsmittels in diesem Bereich nicht thermisch beeinflusst zu werden,

dass die genannte Heizung oder Kühlung des Absorptionsmittelstromes derart erfolgt, dass das aus der genannten senkrechten Röhre zum genannten freien Oberflächenbereich zuströmende Absorptionsmittel auf eine Temperatur gebracht wird, die derjenigen Temperatur, im folgenden als die dynamische Gleichgewichttemperatur bezeichnet, praktisch gleich ist, bei welcher die durch die am genannten freien Oberflächenbereich stattfindende Absorption entwickelte Wärme der durch den am genannten freien Oberflächenbereich vorbeiströmenden Gasstrom vom genannten freien Oberflächenbereich durch Konvektion abgeleiteten Wärme gleich ist,

dass die Parameter des Verfahrens so gewählt werden, dass

a) der Widerstand zu der beim Absorptionsvorgang stattfindenden Stoffdiffusion in der flüssigen Phase im Verhältnis zu dem in der Gasphase vernachlässigbar ist,
b) die Gleichgewichtkonzentration der absorbierbaren Komponente im Gas in der unmittelbaren Nähe des genannten freien Oberflächenbereichs im Verhältnis zur Konzentration der genannten absorbierbaren Komponente im Gasstrom vernachlässigbar ist.

2. Verfahren nach Anspruch 1, dadurch gekennzeichnet, dass der Strom von frischem Absorptionsmittel, bevor er zum genannten freien Oberflächenbereich geleitet wird, mit dem den genannten Bereich verlassenden Strom von verbrauchtem Absorptionsmittel in Gegenstrom in wärmeleitende Verbindung gebracht wird und durch eine wärmeleitende Wand von ihm getrennt ist, wodurch der genannte Strom von frischem Absorptionsmittel durch den genannten Strom von verbrauchtem Absorptionsmittel auf eine Temperatur in der Nähe der dynamischen Gleichgewichttemperatur geheizt oder gekühlt wird.

3. Verfahren nach Anspruch 1, gekennzeichnet durch die folgenden zusätzlichen Verfahrensschritte:

der Gasstrom wird, nachdem er den freien Oberflächenbereich des Absorptionsmittels passiert hat, mit einem Absorptions- oder Adsorptionsmittel in Berührung gebracht, um die absorbierbare Komponente vom Gas zu entfernen,

das so gereinigte Gas wird in einem vorbestimmten Verhältnis unterteilt,

einer der so geschaffenen Gasströme wird mit dem ursprünglichen Gasstrom gemischt, bevor dieser dazu gebracht wird, an dem freien Oberflächenbereich des Absorptionsmittels am oberen Ende der Röhre vorbeizuströmen,

der andere der gereinigten Gasströme kommt nicht mehr zur Verwendung.

4. Vorrichtung zur Ermittlung der Konzentration einer absorbierbaren Komponente in einem Gasstrom gemäss Anspruch 1 oder 2, gekennzeichnet durch

eine senkrechte Röhre (2) mit einer wärmeleitenden Wand und mit einer Öffnung am oberen Ende,

Mittel, durch die ein Strom von flüssigem Absorptionsmittel aufwärts durch die genannte Röhre gefördert wird, so dass das Absorptionsmittel durch die genannte Öffnung ausfliesst und dadurch über der genannten Öffnung einen freien Oberflächenbereich bildet, von dem das Absorptionsmittel nach unten entlang der Aussenseite der Röhre überfliesst,

Mittel, die den Gasstrom an der freien Oberfläche des Absorptionsmittelstromes über der Öffnung der Röhre vorbeiströmen lassen,

einen ersten Temperaturfühler (8), der unmittelbar in oder in der Nähe der genannten Öffnung angebracht ist, u.zw. so, dass der aus der genannten Öffnung ausfliessende Absorptionsmittelstrom den genannten ersten Temperaturfühler (8) vollständig umhüllt, und

einen zweiten Temperaturfühler (9), der in der Bahn des Gasstromes in einem ausreichenden Abstand vom genannten freien Oberflächenbereich, um durch die Temperatur des Absorptionsmittels in diesem Bereich nicht thermisch beeinflusst zu werden, angeordnet ist.

FIGUR 1

A–A

FIGUR 2

A-A